# EUROPEAN PATENT APPLICATION

(11) **EP 4 597 946 A1**
(43) Date of publication of application: **06.08.2025**
(21) Application number: 22959882.6
(22) Date of filing: 27.09.2022
(51) Int. Cl.: H04L 27/00

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LU, Wei, Beijing 100085 (CN)
(74) Representative: Stöckeler, Ferdinand
(86) International application number: PCT/CN2022/121931
(87) International publication number: WO 2024/065233

(57) **Abstract**

Embodiments of the present disclosure provide an information processing method and apparatus, a communication device, and a storage medium. A first core network device receives an application layer identifier sent by a user equipment (UE) after initial registration is completed, wherein the application layer identifier is used for establishing a mapping relationship with a subscriber permanent identifier (SUPI) of the UE.

## Description

### TECHNICAL FIELD

The present disclosure relates to, but is not limited to, the field of wireless communication technology, and specifically to an information processing method and apparatus, a communication device and a storage medium.

### BACKGROUND

Ranging refers to determining a distance between two or more user equipments (UEs) and/or a direction of one UE (i.e., target UE) relative to another UE (i.e., reference UE) via a PC5 (Proximity Services) interface.

Sidelink (SL) positioning uses PC5 to locate the UE to obtain an absolute position, a relative position or ranging information.

A ranging service between two UEs can be triggered by a third-party UE and exposed to the third-party UE. The third-party UE can send a request to a UE subjected to ranging and/or SL positioning over direct communication or via a 5th generation core (5GC) network, and receive a corresponding result. The service request initiated by the third-party UE includes an identifier (ID) of the target UE and an identifier of the reference UE.

In the 5GC, a subscriber permanent identifier (SUPI) is used to identify the UE to store and retrieve its subscription data, profile and/or context data, and is used for routing of UE-related signaling or data flows. However, the SUPI value of the reference UE and the SUPI value of the target UE cannot be exposed to the third-party UE.

### SUMMARY

Embodiments of the present disclosure provide an information processing method and apparatus, a communication device and a storage medium.

According to a first aspect of the embodiments of the present disclosure, an information processing method is provided, performed by a first core network device, including: receiving an application layer identifier sent by a user equipment (UE) after completing initial registration, in which the application layer identifier is used to establish a mapping relationship with a subscriber permanent identifier (SUPI) of the UE.

According to a second aspect of the embodiments of the present disclosure, an information processing method is provided, performed by a second core network device, including: receiving an application layer identifier of a user equipment (UE) sent by a first core network device, in which the application layer identifier of the UE is sent to the first core network device by the UE after completing initial registration, and the application layer identifier is used to establish a mapping relationship with a subscriber permanent identifier (SUPI) of the UE.

According to a third aspect of the embodiments of the present disclosure, an information processing method is provided, performed by a UE, including: sending an application layer identifier of the UE to a first core network device after completing initial registration, in which the application layer identifier is used to establish a mapping relationship with a subscriber permanent identifier (SUPI) of the UE.

According to a fourth aspect of the embodiments of the present disclosure, an information processing apparatus is provided, applied to a first core network device, including: a receiving module, configured to receive an application layer identifier sent by a user equipment (UE) after completing initial registration, in which the application layer identifier is used to establish a mapping relationship with a subscriber permanent identifier (SUPI) of the UE.

According to a fifth aspect of the embodiments of the present disclosure, an information processing apparatus is provided, applied to a second core network device, including: a receiving module, configured to receive an application layer identifier of a user equipment (UE) sent by a first core network device, in which the application layer identifier of the UE is sent to the first core network device by the UE after completing initial registration, and the application layer identifier is used to establish a mapping relationship with a subscriber permanent identifier (SUPI) of the UE.

According to a sixth aspect of the embodiments of the present disclosure, an information processing apparatus is provided, applied to a UE, including: a sending module, configured to send an application layer identifier of the UE to a first core network device after completing initial registration, in which the application layer identifier is used to establish a mapping relationship with a subscriber permanent identifier (SUPI) of the UE.

According to a seventh aspect of the embodiments of the present disclosure, a communication system is provided. The communication system includes a first core network device configured to perform the information processing method according to the first aspect, a second core network device configured to perform the information processing method according to the second aspect, and a UE configured to perform the information processing method according to the third aspect.

According to an eighth aspect of the embodiments of the present disclosure, a communication device is provided. The communication device includes a processor and a memory for storing instructions executable by the processor. The processor is configured to implement the information processing method described in the first aspect, the second aspect or the third aspect when executing the instructions.

According to a ninth aspect of the embodiments of the present disclosure, a computer storage medium for storing a computer executable program is provided. When the computer executable program is executed by a processor, the method described in the first aspect, the second aspect or the third aspect is implemented.

According to the technical solution provided by the embodiments of the present disclosure, a mapping relationship between the application layer identifier sent by the UE after completing the initial registration and the SUPI of the UE may be established by receiving the application layer identifier sent by the UE after completing the initial registration through the first core network device. In this way, the application layer identifier obtained by the UE after completing the initial registration or the application layer identifier updated after completing the initial registration may be reported to a network side device, which can suppress the problem that related services are restricted due to the network side device relying solely on the application layer identifier submitted by the UE for initial registration to establish the mapping relationship with the SUPI of the UE.

It should be understood that the foregoing general description and the following detailed description are exemplary and explanatory only and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure, and together with the specification, serve to explain principles of the embodiments of the present disclosure.
FIG. 1 is a schematic diagram of a wireless communication system according to an embodiment of the present disclosure;
FIG. 2 is a schematic diagram of providing a ranging service to UEs in different scenarios according to an embodiment of the present disclosure;
FIG. 3a is a schematic diagram showing an application layer identifier (ID) registration procedure according to an embodiment of the present disclosure;
FIG. 3b is a schematic diagram showing an application layer ID registration procedure according to an embodiment of the present disclosure;
FIG. 4 is a flowchart of an information processing method according to an embodiment of the present disclosure;
FIG. 5 is a flowchart of an information processing method according to an embodiment of the present disclosure;
FIG. 6 is a flowchart of an information processing method according to an embodiment of the present disclosure;
FIG. 7 is a flowchart of an information processing method according to an embodiment of the present disclosure;
FIG. 8 is a block diagram of an information processing apparatus according to an embodiment of the present disclosure;
FIG. 9 is a block diagram of an information processing apparatus according to another embodiment of the present disclosure;
FIG. 10 is a block diagram of an information processing apparatus according to an embodiment of the present disclosure;
FIG. 11 is a block diagram of a UE according to an embodiment of the present disclosure; and
FIG. 12 is a block diagram of a network side device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first message may also be referred to as the second information, and likewise the second information may be referred to as the first message. Depending on the context, the words "if" and "in a case" used here may be interpreted as "when" or "in response to determining".

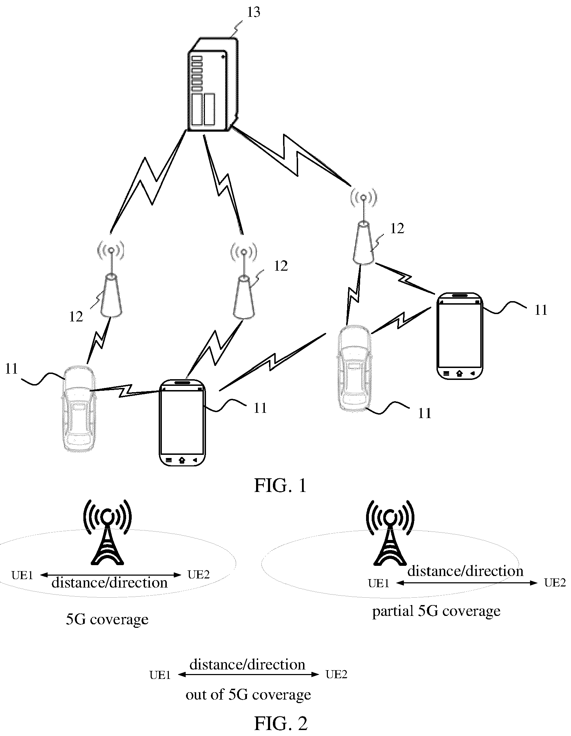

Please refer to FIG. 1, which is a schematic diagram of a wireless communication system according to an embodiment of the present disclosure. As illustrated in FIG. 1, the wireless communication system is a communication system based on the cellular mobile communication technology, and the wireless communication system may include several UEs 11, and several access network devices 12.

The UE 11 may be a device that provides voice and/or data connectivity to users. The UE 11 may communicate with one or more core networks via a radio access network (RAN). The UE 11 may be an Internet of Things (IoT) UE, such as a sensor device, a mobile phone (or a "cellular" phone), and a computer with an IoT UE. For example, it may be a fixed, portable, pocket-sized, handheld, computer-built-in or vehicle-mounted device. For example, it may be a station (STA), a subscriber unit, a subscriber station, a mobile station, a mobile station, a remote station, an access point, a remote UE (remote terminal), an access UE (access terminal), a user terminal, a user agent, a user device, or a user (user equipment, UE). Optionally, the UE 11 may also be a device of an unmanned aerial vehicle. Optionally, the UE 11 may also be a vehicle-mounted device, for example, it may be a driving computer with a wireless communication function, or a wireless communication device externally connected to the driving computer. Optionally, the UE 11 may also be a roadside device, for example, a street lamp, a signal lamp or other roadside devices with a wireless communication function.

The access network device 12 may be a network side device in the wireless communication system. The wireless communication system may be a fourth generation mobile communication (4G) system, also known as a long term evolution (LTE) system; or the wireless communication system may be a 5G system, also known as a new radio (NR) system or a 5G NR system. Optionally, the wireless communication system may be a next generation system of the 5G system. The access network in the 5G system may be referred to as new generation-radio access network (NG-RAN). Optionally, the wireless communication system may be a machine type communication (MTC) system.

The access network device 12 may be an evolved access device (eNB) adopted in the 4G system. Optionally, the access network device 12 may also be an access device (gNB) adopting a centralized distributed architecture in the 5G system. When the access network device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access network device 12 is not limited in the embodiments of the present disclosure.

A wireless connection may be established between the access network device 12 and the UE 11 through a wireless air interface. In different implementations, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new radio interface; or the wireless air interface may also be a wireless air interface based on a next generation mobile communication network technology standard of the 5G standard.

An E2E (End to End) or D2D (device to device) connection may be established between UEs 11, for example, in scenarios such as V2V (vehicle to vehicle) communication, V2I (vehicle to Infrastructure) communication and V2P (vehicle to pedestrian) communication in vehicle to everything (V2X) communication.

The access network device 12 may be located in a communication system integrated with a satellite communication system, and may provide connection service for a satellite, and may connect the satellite to the core network. For example, the access network device 12 may be an access network device having a satellite gateway function in the communication system, such as a gateway device, a ground station device, a non-terrestrial network gateway (NTN-Gateway)/satellite gateway, etc.

The wireless communication system may further include a core network device 13. The several access network devices 12 are connected to the core network device 13, respectively.

For example, the core network device 13 may be a mobility management entity (MME) in an evolved packet core (EPC) network. Optionally, the core network device may also be a serving gateWay (SGW), a public data network gateWay (PGW), a policy and charging rules function (PCRF), or a home subscriber server (HSS). The implementation form of the core network device 13 is not limited in the embodiments of the present disclosure.

For another example, the core network device 13 may include: an access and mobility management function (AMF), a policy control function (PCF), a gateway mobile location center (GMLC), a network exposure function (NEF), a unified data management function (UDM) and/or a direct discovery name management function (DDNMF), etc.

The AMF, PCF, GMLC, NEF, UDM, etc. in the embodiments of the present disclosure may be implemented by one physical device or by multiple physical devices. It is understandable that the AMF, PCF, GMLC, NEF, UDM, etc. in the embodiments of the present disclosure may be a logical function module in a physical device or a logical function module composed of multiple physical devices, which is not limited in the embodiments of the present disclosure.

In order to facilitate understanding of those skilled in the art, the embodiments of the present disclosure provide multiple implementations to clearly illustrate the technical solution of the embodiments of the present disclosure. Of course, those skilled in the art may understand that the multiple embodiments provided by the embodiments of the present disclosure may be implemented separately, or may be implemented together with the methods of other embodiments of the embodiments of the present disclosure, or may be implemented together with some methods in the related art separately or in combination, which is not limited in the embodiments of the present disclosure.

Some terms used in the embodiments of the present disclosure are explained below to help those skilled in the art understand their meanings.

Ranging refers to determining a distance between two or more UEs and/or a direction of one UE (i.e., target UE) relative to another UE (i.e., reference UE) via a PC5 interface.

Sidelink (SL) positioning uses PC5 to locate the UE to obtain an absolute position, a relative position or ranging information.

SL reference UE refers to a UE that supports positioning of the target UE, for example, by sending and/or receiving reference signals for positioning, providing positioning-related information, etc. using SL. In some cases, the SL reference UE may be understood as an "anchor UE".

Target UE refers to a UE whose distance, direction and/or position is measured with the support of one or multiple SL reference UEs using sidelink in the ranging and/or SL (hereinafter, ranging/SL for short) positioning based service.

Assistant UE refers to a UE supporting ranging/SL positioning between a SL reference UE and a target UE over PC5 when the direct ranging/SL positioning between the SL reference UE and the target UE cannot be supported. A measurement/result of the ranging/SL positioning between the assistant UE and the SL reference UE and a measurement/result of the ranging/SL positioning between the assistant UE and the target UE are determined and used to derive a ranging/SL positioning result between the target UE and the SL reference UE.

Located UE refers to a SL reference UE of which the location is obtained or is able to be obtained using Uu based positioning. The Located UE may be used to determine a location of the target UE using SL positioning.

SL positioning server UE refers to a UE offering location calculation, for SL positioning and/or ranging based service. It interacts with other UEs over PC5 in order to calculate the location of the target UE. The target UE or the SL reference UE may act as the SL positioning server UE if the location calculation is supported.

SL positioning client UE refers to a third-party UE, other than the SL reference UE and the target UE, which initiates a ranging/SL positioning service request on behalf of an application residing on it.

The SL positioning client UE does not have to support a ranging/SL positioning capability, but a communication between the SL positioning client UE and the SL reference UE/the target UE has to be established, either via PC5 or via 5GC, for transmission of the service request and the result.

Positioning refers to a functionality, which detects a geographical location and optionally, a velocity of a mobile terminal.

Network-assisted operation refers to an operation of the ranging/SL positioning with the involvement of a 5GC network function (NF), for service request handling and result calculation.

UE-only Operation refers to an operation of the ranging/SL positioning in which the service request handling and result calculation are performed by the UE. For the UE-only operation, the communication between UEs is performed over PC5.

Relative position refers to an estimate of the UE position relative to other network elements or relative to other UEs.

Application layer identifier (ID) refers to an identifier identifying a ranging/SL positioning-enabled UE within context of a specific application, which is used by the SL positioning client UE to identify the target UE and the SL reference UE in the service request.

The ranging and SL positioning service can be supported with or without 5G coverage. FIG. 2 is a schematic diagram of providing a ranging service to UEs in different scenarios such as in 5G coverage, in partial 5G coverage or out of 5G coverage. If a licensed band is used for ranging, it should be fully controlled by an operator.

The SL positioning client UE initiates a service request, which includes an identifier of the target UE and an identifier of the SL reference UE.

In the 5GC, a subscriber permanent identifier (SUPI) is used to identify a UE to store and retrieve its subscription data, profile and context data, and to route signaling or traffic to the UE. However, the SUPI values of the SL reference UE and the target UE cannot be exposed to SL positioning client UE.

For a case where the SL positioning client UE must send a ranging/SL positioning request to the target UE or the reference UE over 5GC, the UE may register its application layer ID to the 5GC NF when initially registering to the network. The 5GC NF is used to maintain a mapping relationship between one or more application layer IDs of the UE and the SUPI, so that the UE's SUPI may be derived using the UE's application layer ID.

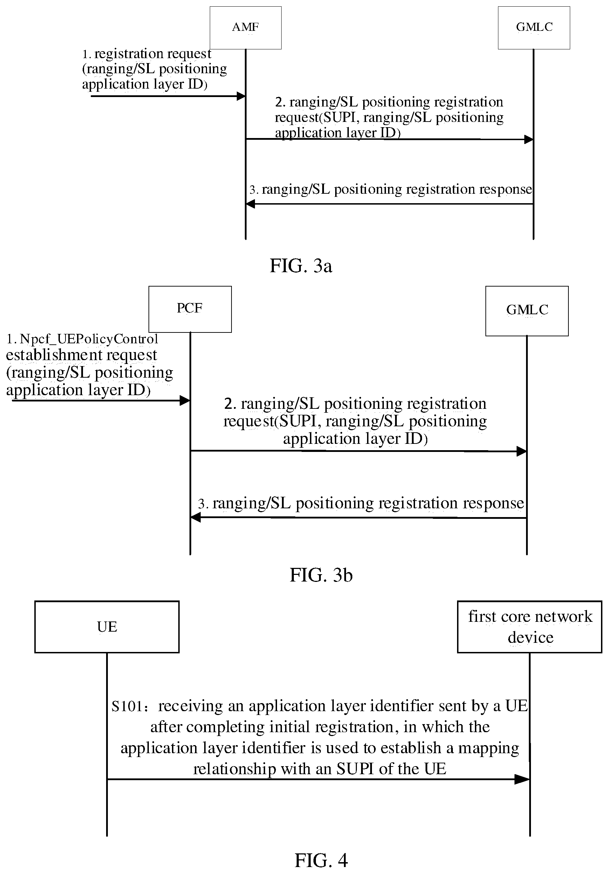

As shown in FIG. 3a, a registration procedure of a ranging/SL positioning application layer ID initiated by the AMF includes the followings.
1, the AMF receives the ranging/SL positioning application layer ID. For example, the ranging/SL positioning application layer ID may be included in the UE's registration request message as partial "5GS mobility management (5GMM) capability".
2, the AMF registers a relationship between the UE's ranging/SL positioning application layer ID and the SUPI to the GMLC.
3, the GMLC stores the relationship between the UE's ranging/SL positioning application layer ID and the SUPI, and responds to the AMF.

Note: the GMLC can be replaced by the NEF during the above registration procedure.

As shown in FIG. 3b, a registration procedure of a ranging/SL positioning application layer ID initiated by the PCF includes the followings.
1, during UE policy association establishment, the PCF receives a UE policy container including the UE's ranging/SL positioning application layer ID, the UE policy container is included in an Npcf_UEPolicyControl create request.
2, the PCF registers the relationship between the UE's ranging/SL positioning application layer ID and the SUPI to the GMLC.
3, the GMLC stores the relationship between the UE's ranging/SL positioning application layer ID and the SUPI, and responds to the PCF.

Note: the GMLC can be replaced by the NEF during the above registration procedure.

However, when the UE initially registers to the network, some application layer IDs are still unknown. An operating system may obtain the application layer ID of an application only after the application has been used. For ranging/SL positioning applications that are newly installed on the UE or have never been used since installation, the application layer IDs of these applications may not be available when the UE initially registers.

Therefore, further research is needed on how to register the application layer ID available to the UE after the UE's initially registers to the 5GC NF (such as GMLC, NEF, etc.).

FIG. 4 is a flowchart of an information processing method according to an embodiment. The information processing method is executed by a first core network device, as shown in FIG. 4, and the method may include the following step.

At step S101, an application layer identifier sent by a UE after completing initial registration is received. The application layer identifier is used to establish a mapping relationship with an SUPI of the UE.

In some examples, the first core network device may be an AMF. In other examples, the first core network device may also be an MME or other devices with similar functions.

The UE may include, but is not limited to, a mobile phone, a tablet computer, a laptop, a personal digital assistant (PDA), a wearable device, a vehicle equipment, an unmanned aerial vehicle, a roadside equipment, an IoT device and/or a narrowband IoT (NB-IOT) device, etc.

One or more application layer identifiers may be sent by the UE after completing the initial registration. Different application layer IDs of the UE correspond to different applications of the UE. The application layer IDs corresponding to the same application in different UEs may be different.

In some examples, the first core network device receives an application layer ID sent by the UE and forwarded or transparently transmitted by an access network device.

In some examples, the application layer ID of the UE may include, but is not limited to: a ranging/SL positioning application layer ID, a VX2 application layer ID, and/or a ProSe (Proximity-based services) application layer ID.

In some examples, the application layer ID sent by the UE after completing the initial registration may include at least one of:
an application layer ID generated by the UE after completing the initial registration;
an application layer ID added by the UE after completing the initial registration; or
an application layer ID updated by the UE after completing the initial registration.

In some examples, the UE does not generate an application layer ID before completing the initial registration. If the UE generates an application layer ID after completing the initial registration, the UE may send the application layer ID generated after the UE completes the initial registration to the first core network device.

In some examples, the UE has registered the application layer ID of the UE to the network side through the first core network device before completing the initial registration. If the UE adds an application layer ID after completing the initial registration, the UE may send the application layer ID added after the UE completes the initial registration to the first core network device.

In some examples, in a case where the UE has registered the application layer ID of the UE to the network side through the first core network device before completing the initial registration, if the application layer ID of the UE is updated after the UE completes the initial registration, the UE may send the application layer ID updated after the UE completes the initial registration to the first core network device.

In some examples, the application layer ID of the UE may be used for the first core network device to send the application layer ID to a second core network device, so that the second core network device establishes a mapping relationship between the application layer ID of the UE and the SUPI of the UE. Here, the second core network device is different from the first core network device, for example, the second core network device may be a PCF, a GMLC or an NEF, etc.

In some examples, the application layer ID(s) of the same UE and the SUPI have a one-to-one mapping relationship or a many-to-one mapping relationship.

In some examples, the mapping relationship may be saved in various forms, such as a configuration file, a table, a database, etc., which is not limited thereto.

In this embodiment, the mapping relationship between the application layer ID of the UE and the SUPI may also be described as a "corresponding relationship" or an "associated relationship".

With the information processing method provided by embodiments of the present disclosure, the first core network device receives the application layer ID sent by the UE after completing the initial registration, and the mapping relationship between the application layer ID sent by the UE after completing the initial registration and the SUPI of the UE may be established. In this way, the application layer ID obtained by the UE after completing the initial registration or the application layer ID updated after completing the initial registration may be reported to the network side device, which can suppress the problem that related services are restricted due to the network side device relying solely on the application layer identifier submitted by the UE for initial registration to establish the mapping relationship with the SUPI of the UE.

In some embodiments, the method may include:
the first core network device receiving the application layer ID of the UE sent by the UE in an initial registration procedure and/or after the initial registration is completed. In this way, the first core network device may receive the application layer ID sent by the UE in the initial registration procedure and/or after the initial registration is completed.

Since the first core network device may still receive the application layer ID sent by the UE after the UE completes the initial registration, the first core network device may obtain the latest available application layer ID of the UE.

**In** an embodiment, in the above step S101, receiving the application layer ID sent by the UE after completing the initial registration may include:
receiving a registration update message including the application layer ID; and/or,
receiving a UE policy container including the application layer ID.

In some examples, the registration update message including the application layer ID may be a periodic registration update message or an aperiodic registration update message of the UE.

For example, the registration request message may be a registration request message for periodic registration update sent by the UE after completing the initial registration.

For another example, the registration request message may be an aperiodic registration update message sent by the UE after completing the initial registration in response to a specific event. Here, the specific event may include: generating the application layer ID, adding the application layer ID, and/or updating the application layer ID after the UE completes the initial registration.

In some examples, the UE policy container including the application layer ID may be sent by the UE during a UE-triggered V2X policy configuration procedure or a UE-triggered ProSe policy configuration procedure after the UE completes the initial registration.

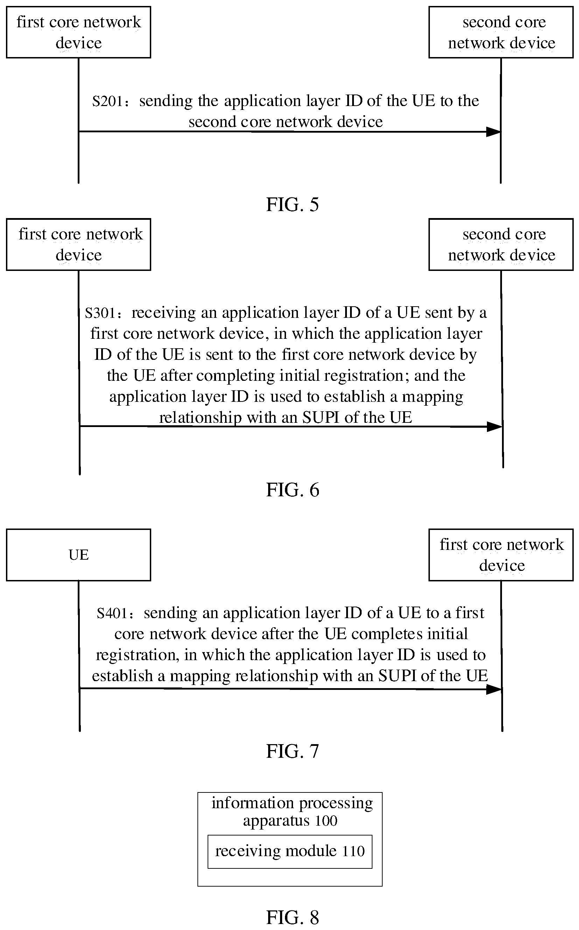

**In** an embodiment, as shown in FIG. 5, the method may further include the following step.

At step S201, the application layer ID of the UE is sent to the second core network device.

In some examples, the second core network device includes at least one of:
a policy control function (PCF); or
a network function (NF).

In some examples, when the first core network device receives a registration update message including the application layer ID of the UE, the first core network device may send the application layer ID and the SUPI of the UE to the NF according to the registration update message, and the NF establishes the mapping relationship between the application layer ID and the SUPI of the UE.

In some other examples, when the first core network device receives the registration update message including the application layer ID, the first core network device may send the application layer ID and the SUPI of the UE to the PCF. For example, based on a subscription request of the PCF, the first core network device sends the application layer ID and the SUPI of the UE to the PCF.

In some further examples, when the first core network device receives a UE policy container including the application layer ID, the first core network device may forward or transparently transmit the UE policy container to the PCF.

In a case where the PCF supports maintaining the mapping relationship between the application layer ID and the SUPI of the UE, the PCF may establish the mapping relationship between the application layer ID and the SUPI of the UE.

**In** a case where the PCF does not support maintaining the mapping relationship between the application layer ID and the SUPI of the UE, the application layer ID and the SUPI of the UE may be sent to the NF through the PCF, and the NF may establish the mapping relationship between the application layer ID and the SUPI of the UE.

In some examples, the NF includes at least one of:
a gateway mobile location center (GMLC);
a network open function (NEF);
a unified data management (UDM); or
a direct discovery name management function (DDNMF).

In this embodiment, if a receiving end that receives the application layer ID sent by the UE after completing the initial registration is at least one of the GMLC, the NEF, the UDM or the DDNMF, the mapping relationship between the application layer ID of the UE and the SUPI may be established by at least one of the GMLC, the NEF, the UDM or the DDNMF.

In an embodiment, in the above step S201, sending the application layer ID of the UE to the second core network device includes:
based on a subscription request of the PCF, sending the application layer ID of the UE to the PCF; in which the subscription request is used to subscribe to an event of receiving the application layer ID of the UE to the first core network device.

In this embodiment, the PCF may obtain, from the first core network device by subscription or the like, the application layer ID sent to the first core network device by the UE after completing the initial registration.

The first core network device confirms whether to perform subscription event reporting according to the subscription request of the PCF. When the first core network device receives the application layer ID sent by the UE after completing the initial registration, the first core network device may perform subscription event reporting, that is, sending the application layer ID of the UE to the PCF.

In an embodiment, in the above step S201, sending the application layer ID of the UE to the second core network device includes:
in a case where the UE is authorized to be a target UE or a reference UE for ranging/SL positioning, sending the application layer ID of the UE to the second core network device.

In some examples, the first core network device may determine, based on subscription data of the UE, whether the UE is authorized to be the target UE or the reference UE for ranging/SL positioning.

For example, the first core network device may send a query request to the UDM through a user subscription data acquisition service message, and determine whether the UE is authorized to be the target UE or the reference UE for ranging/SL positioning according to a query response returned by the UDM. Here, the user subscription data acquisition service message may be Nudm_SDM_GET.

In some other examples, the first core network device may determine whether the UE is authorized to be the target UE or the reference UE for ranging/SL positioning based on the subscription request from the PCF, in which the subscription request carries the SUPI of the UE that is authorized to be the target UE or the reference UE for ranging/SL positioning.

In some examples, in a case where the UE is not authorized to be the target UE or the reference UE for ranging/SL positioning, the first core network device does not send the application layer ID of the UE to the second core network device.

In an embodiment, the application layer ID includes: an application layer ID for ranging/SL positioning of the UE.

In this embodiment, the application layer ID of the UE includes the application layer ID for ranging/SL positioning of the UE. When the network side receives the application layer ID for ranging/SL positioning of the UE, the mapping relationship between the application layer ID for ranging/SL positioning of the UE and the SUPI of the UE may be established. In this way, in a case where the SUPI of the UE cannot be exposed to a third-party UE, the network side may determine the SUPI of the UE based on the preset relationship through the application layer ID of the UE, thereby processing signaling and data related to the ranging/SL positioning of the UE.

FIG. 6 is a flowchart of an information processing method according to an exemplary embodiment. The information processing method is executed by a second core network device, as shown in FIG. 6, and the method may include the following step.

At step S301, an application layer ID of a UE sent by a first core network device is received. The application layer ID of the UE is sent to the first core network device by the UE after completing initial registration; and the application layer ID is used to establish a mapping relationship with an SUPI of the UE.

In some examples, the first core network device may be an AMF.

In other examples, the first core network device may be an MME or other devices with similar functions.

The second core network device is different from the first core network device. For example, the second core network device may be a PCF, a GMLC or an NEF.

The UE may include, but is not limited to, a mobile phone, a tablet computer, a laptop, a personal digital assistant (PDA), a wearable device, a vehicle equipment, an unmanned aerial vehicle, a roadside equipment, an IoT device and/or a narrowband IoT (NB-IOT) device, etc.

One or more application layer identifiers may be sent by the UE after completing the initial registration. Different application layer IDs of the UE correspond to different applications of the UE. The application layer IDs corresponding to the same application in different UEs may be different.

In some examples, the application layer ID of the UE may include, but is not limited to: a ranging/SL positioning application layer ID, a VX2 application layer ID, and/or a ProS application layer ID.

In some examples, the application layer ID sent by the UE after completing the initial registration may include at least one of:
an application layer ID generated by the UE after completing the initial registration;
an application layer ID added by the UE after completing the initial registration; or
an application layer ID updated by the UE after completing the initial registration.

In some examples, the UE does not generate an application layer ID before completing the initial registration. If the UE generates an application layer ID after completing the initial registration, the UE may send the application layer ID generated after the UE completes the initial registration to the first core network device.

In some examples, the UE has registered the application layer ID of the UE to the network side through the first core network device before completing the initial registration. If the UE adds an application layer ID after completing the initial registration, the UE may send the application layer ID added after the UE completes the initial registration to the first core network device.

In some examples, if the UE has registered the application layer ID of the UE to the network side through the first core network device before completing the initial registration, if the application layer ID of the UE is updated after the UE completes the initial registration, the UE may send the application layer ID updated after the UE completes the initial registration to the first core network device.

In some examples, the application layer ID of the UE may be used for the first core network device to send the application layer ID to a second core network device, so that the second core network device establishes a mapping relationship between the application layer ID of the UE and the SUPI of the UE.

In some examples, the application layer ID(s) of the same UE and the SUPI have a one-to-one mapping relationship or a many-to-one mapping relationship.

In some examples, the mapping relationship may be saved in various forms, such as a configuration file, a table, a database, etc., which is not limited thereto.

In this embodiment, the mapping relationship between the application layer ID of the UE and the SUPI may also be described as a "corresponding relationship" or an "associated relationship".

With the information processing method provided by embodiments of the present disclosure, the second core network device receives the application layer ID of the UE sent by the first core network device, the application layer ID of the UE is sent to the first core network device by the UE after completing the initial registration, and the mapping relationship between the application layer ID sent by the UE after completing the initial registration and the SUPI of the UE may be established by the second core network device. In this way, the application layer ID obtained by the UE after completing the initial registration or the application layer ID updated after completing the initial registration may be reported to the network side device, which can suppress the problem that related services are restricted due to the network side device relying solely on the application layer identifier submitted by the UE for initial registration to establish the mapping relationship with the SUPI of the UE.

In some examples, the second core network device includes at least one of:
a policy control function (PCF); or
a network function (NF).

In some examples, if the PCF supports maintaining the mapping relationship between the application layer ID and the SUPI of the UE, the PCF may establish the mapping relationship between the application layer ID and the SUPI of the UE after receiving the application layer ID of the UE sent by the first core network device.

In some examples, if the PCF does not support maintaining the mapping relationship between the application layer ID and the SUPI of the UE, the PCF may send the application layer ID and the SUPI of the UE to the NF after receiving the application layer ID of the UE sent by the first core network device, and the NF may establish the mapping relationship between the application layer ID and the SUPI of the UE.

In some other examples, the first core network device may directly send the application layer ID and the SUPI of the UE to the NF, and the NF may establish the mapping relationship between the application layer ID of the UE and the SUPI of the UE.

In some examples, the NF includes at least one of:
a gateway mobile location center (GMLC);
a network open function (NEF);
a unified data management (UDM); or
a direct discovery name management function (DDNMF).

In this embodiment, if a receiving end that receives the application layer ID sent by the UE after completing the initial registration is at least one of the GMLC, the NEF, the UDM or the DDNMF, the mapping relationship between the application layer ID of the UE and the SUPI may be established by at least one of the GMLC, the NEF, the UDM or the DDNMF.

In an embodiment, in the above step S301, receiving the application layer ID of the UE sent by the first core network device may include:
the NF receiving the application layer ID of the UE sent by the first core network device, in which the application layer ID is included in a registration update message of the UE; and/or
the PCF receiving the application layer ID of the UE sent by the first core network device based on a subscription request of the PCF, in which the subscription request is used to subscribe to an event of receiving the application layer ID of the UE to the first core network device; and/or
the PCF receiving a UE policy container including the application layer ID that is forwarded or transparently transmitted by the first core network device.

In some examples, the registration update message including the application layer ID may be a periodic registration update message or an aperiodic registration update message of the UE.

For example, the registration request message may be a registration request message for periodic registration update sent by the UE after completing the initial registration.

For another example, the registration request message may be an aperiodic registration update message sent by the UE after completing the initial registration in response to a specific event. Here, the specific event may include: generating the application layer ID, adding the application layer ID, and/or updating the application layer ID after the UE completes the initial registration.

In some examples, the PCF may obtain, from the first core network device by subscription or the like, the application layer ID sent by the UE after completing the initial registration. The first core network device confirms whether to perform subscription event reporting according to the subscription request of the PCF. When the first core network device receives the application layer ID sent by the UE after completing the initial registration, the first core network device may perform subscription event reporting, that is, sending the application layer ID of the UE to the PCF.

In some examples, the UE policy container including the application layer ID may be sent by the UE during a UE-triggered V2X policy configuration procedure or a UE-triggered ProSe policy configuration procedure after the UE completes the initial registration.

In an embodiment, the method further includes:
after receiving the application layer ID of the UE, the PCF sending the application layer ID of the UE to the NF.

In this embodiment, if the PCF does not support maintaining the mapping relationship between the application layer ID and the SUPI of the UE, the PCF may send the application layer ID and the SUPI of the UE to the NF after receiving the application layer ID of the UE sent by the first core network device, and the NF may establish the mapping relationship between the application layer ID and the SUPI of the UE.

In an embodiment, in the above step S301, receiving the application layer ID of the UE sent by the first core network device includes:
receiving the application layer ID of the UE sent by the first core network device in a case where the UE is authorized to be a target UE or a reference UE for ranging/SL positioning.

In some examples, the first core network device may determine, based on subscription data of the UE, whether the UE is authorized to be the target UE or the reference UE for ranging/SL positioning.

For example, the first core network device may send a query request to the UDM through a user subscription data acquisition service message, and determine whether the UE is authorized to be the target UE or the reference UE for ranging/SL positioning according to a query response returned by the UDM. Here, the user subscription data acquisition service message may be Nudm_SDM_GET.

In some other examples, the first core network device may determine whether the UE is authorized to be the target UE or the reference UE for ranging/SL positioning based on the subscription request from the PCF, in which the subscription request carries the SUPI of the UE that is authorized to be the target UE or the reference UE for ranging/SL positioning.

In an embodiment, the application layer ID includes: an application layer ID for ranging/SL positioning of the UE.

In this embodiment, the application layer ID of the UE includes the application layer ID for ranging/SL positioning of the UE. When the network side receives the application layer ID for ranging/SL positioning of the UE, the mapping relationship between the application layer ID for ranging/SL positioning of the UE and the SUPI of the UE may be established. In this way, in a case where the SUPI of the UE cannot be exposed to a third-party UE, the network side may determine the SUPI of the UE based on the preset relationship through the application layer ID of the UE, thereby processing signaling and data related to the ranging/SL positioning of the UE.

FIG. 7 is a flowchart of an information processing method according to an exemplary embodiment. The information processing method is executed by a UE, as shown in FIG. 7, and the method may include the following step.

At step S401, an application layer ID of a UE is sent to a first core network device after the UE completes initial registration. The application layer ID is used to establish a mapping relationship with an SUPI of the UE.

In this embodiment, the UE may include, but is not limited to, a mobile phone, a tablet computer, a laptop, a personal digital assistant (PDA), a wearable device, a vehicle equipment, an unmanned aerial vehicle, a roadside equipment, an IoT device and/or a narrowband IoT (NB-IOT) device, etc.

In some examples, the first core network device may be an AMF.

In other examples, the first core network device may be an MME or other devices with similar functions.

In some examples, the application layer ID of the UE is forwarded or transparently transmitted to the first core network device via an access device.

One or more application layer identifiers may be sent by the UE after completing the initial registration. Different application layer IDs of the UE correspond to different applications of the UE. The application layer IDs corresponding to the same application in different UEs may be different.

In some examples, the application layer ID of the UE may include, but is not limited to: a ranging/SL positioning application layer ID, a VX2 application layer ID, and/or a ProS application layer ID.

In some examples, the application layer ID sent by the UE after completing the initial registration may include at least one of:
an application layer ID generated by the UE after completing the initial registration;
an application layer ID added by the UE after completing the initial registration; or
an application layer ID updated by the UE after completing the initial registration.

In some examples, the application layer ID(s) of the same UE and the SUPI have a one-to-one mapping relationship or a many-to-one mapping relationship.

In some examples, the application layer ID of the UE may be used for the first core network device to send the application layer ID to a second core network device, so that the second core network device establishes a mapping relationship between the application layer ID of the UE and the SUPI of the UE.

Here, the second core network device is different from the first core network device. For example, the second core network device may be a PCF, a GMLC or an NEF.

In some examples, the mapping relationship may be saved in various forms, such as a configuration file, a table, a database, etc., which is not limited thereto.

In this embodiment, the mapping relationship between the application layer ID of the UE and the SUPI may also be described as a "corresponding relationship" or an "associated relationship".

With the information processing method provided by embodiments of the present disclosure, the UE sends the application layer ID of the UE to the first core network device after complete the initial registration, the application layer ID is used to establish the mapping relationship with the SUPI of the UE. In this way, the application layer ID obtained by the UE after completing the initial registration or the application layer ID updated after completing the initial registration may be reported to the network side device, which can suppress the problem that related services are restricted due to the network side device relying solely on the application layer identifier submitted by the UE for initial registration to establish the mapping relationship with the SUPI of the UE.

In some embodiments, the method may include:
the UE sending the application layer ID of the UE to the first core network device during an initial registration procedure and/or after the initial registration is completed. In this way, the first core network device may receive the application layer ID sent by the UE during the initial registration procedure and/or after the initial registration is completed.

Since the first core network device may still receive the application layer ID sent by the UE after the UE completes the initial registration, the first core network device may obtain the latest available application layer ID of the UE.

In an embodiment, in the above step S401, sending the application layer ID of the UE to the first core network device after completing the initial registration may include:
sending the application layer ID of the UE to the first core network device in a case where the UE has the available application layer ID after completing the initial registration.

In some examples, sending the application layer ID of the UE to the first core network device in a case where the UE has the available application layer ID after completing the initial registration includes at least one of:
in a case where the UE has an application layer ID generated after completing the initial registration, sending the application layer ID generated to the first core network device;
in a case where the UE has an application layer ID updated after completing the initial registration, sending the application layer ID updated to the first core network device; or
in a case where the UE has an application layer ID added after completing the initial registration, sending the application layer ID added to the first core network device.

In some examples, the UE does not generate an application layer ID before completing the initial registration. If the UE generates an application layer ID after completing the initial registration, the UE may send the application layer ID generated after the UE completes the initial registration to the first core network device.

In some examples, the UE has registered the application layer ID of the UE to the network side through the first core network device before completing the initial registration. If the UE adds an application layer ID after completing the initial registration, the UE may send the application layer ID added after the UE completes the initial registration to the first core network device.

In some examples, in a case where the UE has registered the application layer ID of the UE to the network side through the first core network device before completing the initial registration, if the application layer ID of the UE is updated after the UE completes the initial registration, the UE may send the application layer ID updated after the UE completes the initial registration to the first core network device.

In some examples, sending the application layer ID of the UE to the first core network device after completing the initial registration includes:
sending a registration update message including the application layer ID to the first core network device; and/or
sending a UE policy container including the application layer ID to the first core network device, in which the UE policy container is forwarded or transparently transmitted by the first core network device to the PCF.

In some examples, the registration update message including the application layer ID may be a periodic registration update message or an aperiodic registration update message of the UE.

For example, the registration request message may be a registration request message for periodic registration update sent by the UE after completing the initial registration.

For another example, the registration request message may be an aperiodic registration update message sent by the UE after completing the initial registration in response to a specific event. Here, the specific event may include: generating the application layer ID, adding the application layer ID, and/or updating the application layer ID after the UE completes the initial registration.

In some examples, the UE policy container including the application layer ID may be sent by the UE during a UE-triggered V2X policy configuration procedure or a UE-triggered ProSe policy configuration procedure after the UE completes the initial registration.

In an embodiment, the application layer ID includes: an application layer ID for ranging/SL positioning of the UE.

In this embodiment, the application layer ID of the UE includes the application layer ID for ranging/SL positioning of the UE. When the network side receives the application layer ID for ranging/SL positioning of the UE, the mapping relationship between the application layer ID for ranging/SL positioning of the UE and the SUPI of the UE may be established. In this way, in a case where the SUPI of the UE cannot be exposed to a third-party UE, the network side may determine the SUPI of the UE based on the preset relationship through the application layer ID of the UE, thereby processing signaling and data related to the ranging/SL positioning of the UE.

In order to further explain any embodiment of the present disclosure, several specific embodiments are provided below.

In the following, the embodiments of the present disclosure are described by taking ranging/SL positioning application layer ID as an example.

With the information processing method provided in the embodiments of the present disclosure, after the UE completes initial registration, when a new application layer ID for ranging/SL positioning is available to the UE, the UE may register the available application layer ID to the network.

Option 1, the AMF registers the application layer ID.

When the new application layer ID for ranging/SL positioning is available to the UE, the UE includes the new application layer ID in a registration request message for periodic registration update. If the AMF receives the application layer ID of the UE, it registers the application layer ID together with the UE's SUPI to the 5GC NF (e.g., NEF, GMLC, PCF, UDM or DDNMF), which can be used to maintain a mapping table between the UE's application layer ID and the SUPI for subsequent use (e.g., the UE is a target UE or a reference UE of the ranging/SL positioning request).

Option 2, the PCF registers the application layer ID.

2-A, when the AMF receives a ranging/SL positioning application layer ID(s), the AMF reports the ranging/SL positioning application layer ID(s) to the PCF based on PCF subscription. The PCF registers the ranging/SL positioning application layer ID together with the UE's SUPI to the 5GC NF (e.g., NEF, GMLC, PCF, UDM or DDNMF), which can be used to maintain a mapping table between the UE's application layer ID and the SUPI for subsequent use (e.g., the UE is a target UE or a reference UE of the ranging/SL positioning request).

During a UE policy association procedure, the PCF needs to subscribe to the event of "receiving the ranging/SL positioning application layer ID(s)" to the AMF for the UE, the UE is a UE authorized to be the target UE or the SL reference UE for ranging/SL positioning.

2-B, the UE includes the ranging/SL positioning application layer ID in the UE policy container and send it to the PCF during a UE-triggered V2X policy configuration procedure or a UE-triggered ProSe policy configuration procedure. If the application layer ID of the UE is received, the PCF registers it together with UE's SUPI to the 5GC NF (e.g., NEF, GMLC, PCF, UDM or DDNMF), which can be used to maintain a mapping table between the UE's application layer ID and the SUPI for subsequent use (e.g., the UE is a target UE or a reference UE of the ranging/SL positioning request).

According to the technical solution provided by the embodiments of the present disclosure, after the UE initially registers to the 5GC NF (such as NEF, GMLC, PCF, UDM or DDNMF) in the network, the 5GC may register the application layer ID available to the UE.

FIG. 8 is a block diagram of an information processing apparatus according to an embodiment of the present disclosure. The information processing apparatus is applied in a first core network device. As illustrated in FIG. 8, the information processing apparatus 100 includes a receiving module 110.

The receiving module 110 is configured to receive an application layer identifier sent by a user equipment (UE) after completing initial registration, in which the application layer identifier is used to establish a mapping relationship with a subscriber permanent identifier (SUPI) of the UE.

In an embodiment, the receiving module 110 is configured to:
receive a registration update message comprising the application layer identifier; and/or
receive a UE policy container comprising the application layer identifier.

In an embodiment, the information processing apparatus 100 further includes:
a sending module, configured to send the application layer identifier of the UE to a second core network device.

In an embodiment, the second core network device includes at least one of:
a policy control function (PCF); or
a network function (NF).

In an embodiment, the sending module is configured to:
send, based on a subscription request of the PCF, the application layer identifier of the UE to the PCF, in which the subscription request is used to subscribe to an event of receiving the application layer identifier of the UE to the first core network device.

In an embodiment, the sending module is configured to:
in a case where the UE is authorized to be a target UE or a reference UE for ranging/SL positioning, send the application layer identifier of the UE to the second core network device.

In an embodiment, the application layer identifier includes: an application layer identifier for ranging/SL positioning of the UE.

In an embodiment, the NF includes at least one of:
a gateway mobile location center (GMLC);
a network exposure function (NEF);
a unified data management function (UDM); or
a direct discovery name management function (DDNMF).

In an embodiment, the first core network device is an access and mobility management function (AMF).

In an embodiment, the application layer identifier includes at least one of:
an application layer identifier generated by the UE after completing the initial registration;
an application layer identifier added by the UE after completing the initial registration; or
an application layer identifier updated by the UE after completing the initial registration.

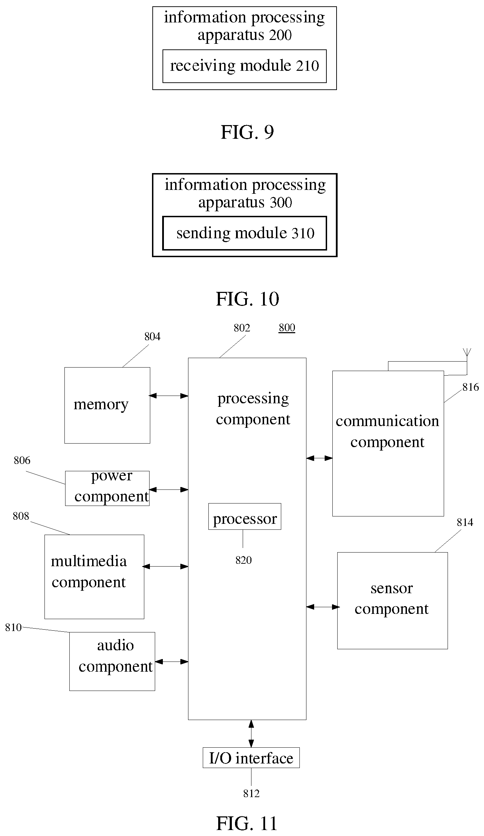

FIG. 9 is a block diagram of an information processing apparatus according to an embodiment of the present disclosure. The information processing apparatus is applied in a second core network device. As illustrated in FIG. 9, the information processing apparatus 200 includes a receiving module 210.

The receiving module 210 is configured to receive an application layer identifier of a user equipment (UE) sent by a first core network device, in which the application layer identifier of the UE is sent to the first core network device by the UE after completing initial registration, and the application layer identifier is used to establish a mapping relationship with a subscriber permanent identifier (SUPI) of the UE.

In an embodiment, the second core network device includes at least one of:
a policy control function (PCF); or
a network function (NF).

In an embodiment, the receiving module 210 is configured to:
receive, by the NF, the application layer identifier of the UE sent by the first core network device, in which the application layer identifier is comprised in a registration update message of the UE; and/or
receive, by the PCF, the application layer identifier of the UE sent by the first core network device based on a subscription request of the PCF, in which the subscription request is used to subscribe to an event of receiving the application layer identifier of the UE to the first core network device; and/or
receive, by the PCF, a UE policy container comprising the application layer identifier forwarded or transmitted transparently by the first core network device.

In an embodiment, the information processing apparatus 200 further includes:
a sending module, configured to send the application layer identifier of the UE to the NF by the PCF after receiving the application layer identifier of the UE.

In an embodiment, the receiving module 210 is configured to:
receive the application layer identifier of the UE sent by the first core network device in a case where the UE is authorized to be a target UE or a reference UE for ranging/SL positioning.

In an embodiment, the application layer identifier comprises: an application layer identifier for ranging/SL positioning of the UE.

In an embodiment, the NF includes at least one of:
a gateway mobile location center (GMLC);
a network exposure function (NEF);
a unified data management function (UDM); or
a direct discovery name management function (DDNMF).

In an embodiment, the application layer identifier includes at least one of:
an application layer identifier generated by the UE after completing the initial registration;
an application layer identifier added by the UE after completing the initial registration; or
an application layer identifier updated by the UE after completing the initial registration.

In an embodiment, the first core network device is an access and mobility management function (AMF).

FIG. 10 is a block diagram of an information processing apparatus according to an embodiment of the present disclosure. The information processing apparatus is applied in a UE. As illustrated in FIG. 10, the information processing apparatus 300 includes a sending module 310.

The sending module 310 is configured to send an application layer identifier of the UE to a first core network device after completing initial registration, in which the application layer identifier is used to establish a mapping relationship with a subscriber permanent identifier (SUPI) of the UE.

In an embodiment, the sending module 310 is configured to:
send the application layer identifier of the UE to the first core network device in a case where the UE has an available application layer identifier after completing the initial registration.

In an embodiment, the sending module 310 is configured to perform at least one of:
in a case where the UE has an application layer identifier generated after completing the initial registration, sending the application layer identifier generated to the first core network device;
in a case where the UE has an application layer identifier updated after completing the initial registration, sending the application layer identifier updated to the first core network device; or
in a case where the UE has an application layer identifier added after completing the initial registration, sending the application layer identifier added to the first core network device.

In an embodiment, the sending module 310 is configured to:
send a registration update message including the application layer identifier to the first core network device; and/or
send a UE policy container including the application layer identifier to the first core network device, in which the UE policy container is forwarded or transmitted transparently by the first core network device to a policy control function (PCF).

In an embodiment, the application layer identifier includes: an application layer identifier for ranging/SL positioning of the UE.

In an embodiment, the first core network device is an access and mobility management function (AMF).

The embodiments of the present disclosure provide a communication system, including:
a user equipment (UE), configured to send an application layer identifier of the UE to a first core network device after completing initial registration;
the first core network device, configured to receive an application layer identifier sent by the UE after completing the initial registration; and
a second core network device, configured to receive the application layer identifier of the UE sent by the first core network device, in which the application layer identifier is used to establish a mapping relationship with a subscriber permanent identifier (SUPI) of the UE.

In an embodiment, the UE is configured to send the application layer identifier of the UE to the first core network device in a case where the UE has an available application layer identifier after completing the initial registration.

In an embodiment, the UE is configured to perform at least one of:
in a case where the UE has an application layer identifier generated after completing the initial registration, sending the application layer identifier generated to the first core network device;
in a case where the UE has an application layer identifier updated after completing the initial registration, sending the application layer identifier updated to the first core network device; or
in a case where the UE has an application layer identifier added after completing the initial registration, sending the application layer identifier added to the first core network device.

In an embodiment, the first core network device is configured to:
receive a registration update message comprising the application layer identifier; and/or
receive a UE policy container comprising the application layer identifier.

In an embodiment, the first core network device is configured to:
send the application layer identifier of the UE to a second core network device.

In an embodiment, the second core network device includes at least one of:
a policy control function (PCF); or
a network function (NF).

In an embodiment, the NF is configured to receive the application layer identifier of the UE sent by the first core network device, in which the application layer identifier is comprised in a registration update message of the UE; and/or
the PCF is configured to receive the application layer identifier of the UE sent by the first core network device based on a subscription request of the PCF, in which the subscription request is used to subscribe to an event of receiving the application layer identifier of the UE to the first core network device; and/or
the PCF is configured to receive a UE policy container comprising the application layer identifier forwarded or transmitted transparently by the first core network device.

In an embodiment, the PCF is configured to send the application layer identifier of the UE to the NF after receiving the application layer identifier of the UE.

In an embodiment, the first core network device is configured to:

in a case where the UE is authorized to be a target UE or a reference UE for ranging/SL positioning, send the application layer identifier of the UE to the second core network device.

In an embodiment, the application layer identifier comprises: an application layer identifier for ranging/SL positioning of the UE.

In an embodiment, the NF includes at least one of:
a gateway mobile location center (GMLC);
a network exposure function (NEF);
a unified data management function (UDM); or
a direct discovery name management function (DDNMF).

In an embodiment, the first core network device is an access and mobility management function (AMF).

In an embodiment, the application layer identifier includes at least one of:
an application layer identifier generated by the UE after completing the initial registration;
an application layer identifier added by the UE after completing the initial registration; or
an application layer identifier updated by the UE after completing the initial registration.

The embodiments of the present disclosure provide a communication device, including:
a processor; and
a memory for storing instructions executable by the processor;
in which the processor is configured to implement the information processing method of any one of the above technical solutions when executing the instructions.

The processor may include various types of storage media, which may be non-transitory computer storage media that may continue to remember information stored thereon after the communication device is powered off.

In some examples, the communication device may include but is not limited to at least one of: a UE or a core network device, etc. Here, the core network device may include an NEF, a GMLC, a PCF, a UDM and a DDNMF.

The processor may be connected to the memory via a bus or the like, and is used to read an executable program stored in the memory, for example, at least one of the information processing methods shown in FIG. 4 to FIG. 7.

FIG. 11 is a block diagram of a UE 800 according to an embodiment of the disclosure. For example, UE 800 can be a mobile phone, computer, digital broadcast user device, message transceiver, game console, tablet device, medical device, fitness device, personal digital assistant, etc.

Referring to FIG. 8, the UE 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls the overall operation of the UE 800, such as those associated with display, telephone calls, data communication, camera operation, and recording operations. The processing component 802 may include one or more processors 820 to execute instructions to complete all or part of the blocks of the method described above. In addition, the processing component 802 may include one or more modules to facilitate the processing of interactions between the component 802 and other components. For example, the processing component 802 may include a multimedia module to facilitate the interaction between the multimedia component 808 and the processing component 802.

The memory 804 is configured to store various types of data to support operations in the UE 800. Examples of such data include instructions for any application or method used to operate on the UE 800, contact data, phone book data, messages, pictures, videos, etc. The memory 804 can be implemented by any type of volatile or non-volatile memory or a combination of them, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD.

The power component 806 provides power to the various components of the UE 800. The power component 806 may include a power management system, at least one power supply, and other components associated with generating, managing, and distributing power for the UE 800.

The multimedia component 808 includes a screen providing an output interface between the UE 800 and the user. In some embodiments, the screen may include a liquid crystal display (LCD) and a touch panel (TP). If the screen includes a touch panel, the screen can be implemented as a touch screen to receive input signals from the user. The touch panel includes at least one touch sensor to sense touch, swiping, and gestures on the touch panel. The touch sensor can not only sense the boundaries of the touch or slide action, but also detect the wake time and pressure associated with the touch or slide operation. In some embodiments, the multimedia component 808 includes a front camera and/or a rear camera. When the UE 800 is in operation mode, such as shooting mode or video mode, the front camera and/or rear camera can receive external multimedia data. Each front camera and rear camera can be a fixed optical lens system or have focal length and optical zoom capabilities.

The audio component 810 is configured to output and/or input audio signals. For example, the audio component 810 includes a microphone (MIC) that is configured to receive external audio signals when the UE 800 is in operational mode, such as call mode, recording mode, and speech recognition mode. The received audio signal may be further stored in memory 804 or transmitted via a communication component 816. In some embodiments, the audio component 810 also includes a loudspeaker for outputting an audio signal.

The I/O interface 812 provides an interface between the processing component 802 and the peripheral interface module, which can be a keyboard, a click wheel, a button, etc. The button may include, but are not limited to: a home button, a volume button, a start button, and a lock button.

The sensor component 814 includes at least one sensor to provide a condition assessment of all aspects of the UE 800. For example, the sensor component 814 can detect the on/off state of the apparatus 800, the relative positioning of the components, such as the display and keypad of the UE 800, the sensor component 814 can also detect changes in the position of the UE 800 or one of the components of the UE 800, the presence or absence of contact between the user and the UE 800, position or acceleration/deceleration of the UE 800 and temperature change of the UE 800. The sensor component 814 may include a proximity sensor configured to detect the presence of nearby objects in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access wireless networks based on communication standards, such as WiFi, 2G or 3G, 4G, 5G or a combination of them. In an exemplary embodiment, the communication component 2424 receives broadcast signals or broadcast-related information from an external broadcast management system via a broadcast channel. In an exemplary embodiment, the communication component 816 also includes a near-field communication (NFC) module to facilitate short-range communication. For example, the NFC module can be implemented based on radio frequency identification (RFID) technology, infrared data association (IrDA) technology, ultra-wideband (UWB) technology, bluetooth (BT) technology and other technologies.

In an exemplary embodiment, the UE 800 can be used to perform any of the above methods of the UE by implementing by at least one application specific integrated circuit (ASIC), digital signal processor (DSP), digital signal processing device (DSPD), programmable logic device (PLD), field programmable gate array (FPGA), controller, microcontroller, microprocessor, or other electronic components.

In an embodiment, a non-transitory computer-readable storage medium including instructions is also provided, such as a memory 804 including instructions, and the instructions may be executed by the processor 820 of the UE 800 to generate the above method. For example, the non-transitory computer-readable storage medium may be a ROM, a random access memory (RAM), a CD-ROM, a magnetic tape, a floppy disk, an optical data storage device, etc.

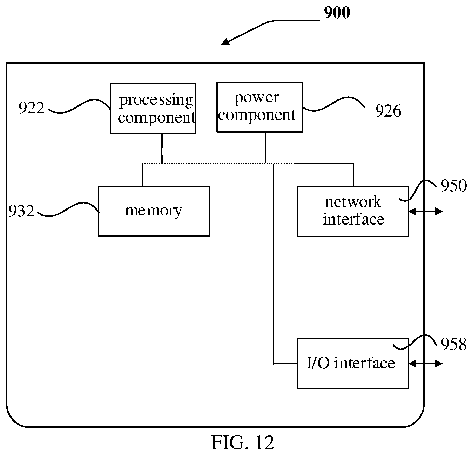

FIG. 12 is a block diagram of a network device according to an embodiment of the disclosure. For example, network device 900 includes a processing component 922, which further includes one or more processors, and memory resources represented by a memory 932 for storing instructions, such as applications, that can be executed by the processing component 922. The applications stored in memory 932 may include one or more modules in which each corresponds to a set of instructions. In addition, the processing component 922 is configured to execute instructions to implement any one of the methods applied to the first core network device or the second core network device.

The network device 900 may also include a power supply component 926 configured to perform power management of the network device 900, a wired or wireless network interface 950 configured to connect the network device 900 to the network, and an input/output (I/O) interface 958. The network device 900 can operate operating systems based on storage in the memory 932, such as Windows Server TM, Mac OS XTM, Unix TM, Linux TM, Free BSDTM and so on.

In the embodiments of the present disclosure, a non-transitory computer-readable storage medium including instructions is also provided, such as a memory including instructions, and the instructions can be executed by a processor of a network device to generate the above-mentioned information processing method. For example, the non-transitory computer-readable storage medium may be a ROM, a random access memory (RAM), a CD-ROM, a magnetic tape, a floppy disk, an optical data storage device, etc.

Those skilled in the art, after considering the specification and practicing the invention disclosed herein, will readily think of other embodiments of the disclosure. This disclosure is intended to cover any variation, use, or adaptation of the invention that follows the general principles of the invention and includes common knowledge or conventional technical means in the field of technology that are not disclosed in this disclosure. The specification and embodiments are considered as examples, and the true scope and spirit of this disclosure are indicated by the claims below.

It should be understood that this disclosure is not limited to the precise structure already described above and illustrated in the attached drawings, and that various modifications and changes can be made without departing from its scope. The scope of this disclosure is limited only by the attached claims.

## Claims

1. An information processing method, performed by a first core network device, comprising:
receiving an application layer identifier sent by a user equipment (UE) after completing initial registration, wherein the application layer identifier is used to establish a mapping relationship with a subscriber permanent identifier (SUPI) of the UE.

2. The method of claim 1, wherein receiving the application layer identifier sent by the UE after completing the initial registration comprises:
receiving a registration update message comprising the application layer identifier; and/or receiving a UE policy container comprising the application layer identifier.

3. The method of claim 1 or 2, further comprising:
sending the application layer identifier of the UE to a second core network device.

4. The method of claim 3, wherein the second core network device comprises at least one of:
a policy control function (PCF); or
a network function (NF).

5. The method of claim 4, wherein sending the application layer identifier of the UE to the second core network device comprises:
sending, based on a subscription request of the PCF, the application layer identifier of the UE to the PCF, wherein the subscription request is used to subscribe to an event of receiving the application layer identifier of the UE to the first core network device.

6. The method of any of claims 3-5, wherein sending the application layer identifier of the UE to the second core network device comprises:
in a case where the UE is authorized to be a target UE or a reference UE for ranging and/or sidelink positioning, sending the application layer identifier of the UE to the second core network device.

7. The method of any of claims 1-6, wherein the application layer identifier comprises: an application layer identifier for ranging and/or sidelink positioning of the UE.

8. The method of claim 4 or 5, wherein the NF comprises at least one of:
a gateway mobile location center (GMLC);
a network exposure function (NEF);
a unified data management function (UDM); or
a direct discovery name management function (DDNMF).

9. The method of any of claims 1-8, wherein the first core network device is an access and mobility management function (AMF).

10. The method of any of claims 1-9, wherein the application layer identifier comprises at least one of:
an application layer identifier generated by the UE after completing the initial registration;
an application layer identifier added by the UE after completing the initial registration; or
an application layer identifier updated by the UE after completing the initial registration.

11. An information processing method, performed by a second core network device, comprising:
receiving an application layer identifier of a user equipment (UE) sent by a first core network device, wherein the application layer identifier of the UE is sent to the first core network device by the UE after completing initial registration, and the application layer identifier is used to establish a mapping relationship with a subscriber permanent identifier (SUPI) of the UE.

12. The method of claim 11, wherein the second core network device comprises at least one of:
a policy control function (PCF); or
a network function (NF).

13. The method of claim 12, wherein receiving the application layer identifier of the UE sent by the first core network device comprises at least one of:
receiving, by the NF, the application layer identifier of the UE sent by the first core network device, wherein the application layer identifier is comprised in a registration update message of the UE;
receiving, by the PCF, the application layer identifier of the UE sent by the first core network device based on a subscription request of the PCF, wherein the subscription request is used to subscribe to an event of receiving the application layer identifier of the UE to the first core network device; or
receiving, by the PCF, a UE policy container comprising the application layer identifier forwarded or transmitted transparently by the first core network device.

14. The method of claim 13, further comprising:
sending the application layer identifier of the UE to the NF by the PCF after receiving the application layer identifier of the UE.

15. The method of any of claims 11-13, wherein receiving the application layer identifier of the UE sent by the first core network device comprises:
receiving the application layer identifier of the UE sent by the first core network device in a case where the UE is authorized to be a target UE or a reference UE for ranging and/or sidelink positioning.

16. The method of any of claims 11-15, wherein the application layer identifier comprises: an application layer identifier for ranging and/or sidelink positioning of the UE.

17. The method of any of claims 12-14, wherein the NF comprises at least one of:
a gateway mobile location center (GMLC);
a network exposure function (NEF);
a unified data management function (UDM); or
a direct discovery name management function (DDNMF).

18. The method of any of claims 11-17, wherein the application layer identifier comprises at least one of:
an application layer identifier generated by the UE after completing the initial registration;
an application layer identifier added by the UE after completing the initial registration; or
an application layer identifier updated by the UE after completing the initial registration.

19. The method of any of claims 11-18, wherein the first core network device is an access and mobility management function (AMF).

20. An information processing method, performed by a user equipment (UE), comprising:
sending an application layer identifier of the UE to a first core network device after completing initial registration, wherein the application layer identifier is used to establish a mapping relationship with a subscriber permanent identifier (SUPI) of the UE.

21. The method of claim 20, wherein sending the application layer identifier of the UE to the first core network device after completing the initial registration comprises:
sending the application layer identifier of the UE to the first core network device in a case where the UE has an available application layer identifier after completing the initial registration.

22. The method of claim 21, wherein sending the application layer identifier of the UE to the first core network device in a case where the UE has the available application layer identifier after completing the initial registration comprises at least one of:
in a case where the UE has an application layer identifier generated after completing the initial registration, sending the application layer identifier generated to the first core network device;
in a case where the UE has an application layer identifier updated after completing the initial registration, sending the application layer identifier updated to the first core network device; or
in a case where the UE has an application layer identifier added after completing the initial registration, sending the application layer identifier added to the first core network device.

23. The method of any of claims 20-22, wherein sending the application layer identifier of the UE to the first core network device after completing the initial registration comprises at least one of:
sending a registration update message comprising the application layer identifier to the first core network device; or
sending a UE policy container comprising the application layer identifier to the first core network device, wherein the UE policy container is forwarded or transmitted transparently by the first core network device to a policy control function (PCF).

24. The method of any of claims 20-23, wherein the application layer identifier comprises: an application layer identifier for ranging and/or sidelink positioning of the UE.

25. The method of any of claims 20-24, wherein the first core network device is an access and mobility management function (AMF).

26. An information processing apparatus, applied to a first core network device, comprising:
a receiving module, configured to receive an application layer identifier sent by a user equipment (UE) after completing initial registration, wherein the application layer identifier is used to establish a mapping relationship with a subscriber permanent identifier (SUPI) of the UE.

27. An information processing apparatus, applied to a second core network device, comprising:
a receiving module, configured to receive an application layer identifier of a user equipment (UE) sent by a first core network device, wherein the application layer identifier of the UE is sent to the first core network device by the UE after completing initial registration, and the application layer identifier is used to establish a mapping relationship with a subscriber permanent identifier (SUPI) of the UE.

28. An information processing apparatus, applied to a user equipment (UE), comprising:
a sending module, configured to send an application layer identifier of the UE to a first core network device after completing initial registration, wherein the application layer identifier is used to establish a mapping relationship with a subscriber permanent identifier (SUPI) of the UE.

29. A communication system, comprising:
a first core network device, configured to perform the information processing method according to any of claims 1-10;
a second core network device, configured to perform the information processing method according to any of claims 11-19; and
a user equipment (UE), configured to perform the information processing method according to any of claims 20-25.

30. A communication device, comprising:
a processor; and
a memory for storing instructions executable by the processor;
wherein the processor is configured to implement the information processing method of any one of claims 1 to 25 when executing the instructions.

31. A computer storage medium for storing a computer executable program, wherein when the computer executable program is executed by a processor, the information processing method of any one of claims 1 to 25 is implemented.
